# EUROPEAN PATENT APPLICATION

(11) **EP 4 692 229 A1**
(43) Date of publication of application: **11.02.2026**
(21) Application number: 24785180.1
(22) Date of filing: 02.04.2024
(51) Int. Cl.: C08L 55/02, C08L 25/12, C08L 67/02, C08L 85/02, C08G 79/04

(54) **FLAME-RETARDANT RESIN COMPOSITION, AND METHOD FOR PRODUCING SAME**

(30) Priority: 06.04.2023 KR 20230045524
(71) Applicant: LG CHEM, LTD., Seoul 07336 (KR)
(72) Inventor: YANG, Hee Seung, Daejeon 34122 (KR); BAE, Seon Hyeong, Daejeon 34122 (KR); NAM, Ki Young, Daejeon 34122 (KR); YOO, Je Sun, Daejeon 34122 (KR); SIM, Jae Young, Daejeon 34122 (KR)
(74) Representative: Vossius & Partner Patentanwälte Rechtsanwälte mbB
(86) International application number: PCT/KR2024/004268
(87) International publication number: WO 2024/210475

(57) **Abstract**

The present invention relates to a flame retardant resin composition including a specific compound as a phosphorus-based flame retardant in a resin composition and thus obtaining excellent flame retardancy, and a method for preparing the same.

## Description

### TECHNICAL FIELD

### Cross-reference to Related Applications

This application claims the benefit of Korean Patent Application No. 10-2023-0045524, filed on April 6, 2023, in the Korean Intellectual Property Office, the disclosure of which is incorporated herein in its entirety by reference.

### Technical Field

The present invention relates to a flame retardant resin composition including a flame retardant, and a method for preparing the same.

### BACKGROUND ART

In general, styrene-based resins include an acrylonitrile-butadiene-styrene copolymer, a styreneacrylonitrile copolymer, and the like. For example, the acrylonitrile-butadiene-styrene (hereinafter, referred to as ABS) resin has been widely used as an exterior material for electrical/electronic products, office equipment, and the like due to stiffness and chemical resistance of acrylonitrile and processability and mechanical strength of butadiene and styrene. However, the ABS resin is inherently readily combustible and has almost no resistance to fire. Therefore, the ABS resin used for electrical/electronic products, office equipment, and the like is required to satisfy flame retardancy standards to ensure stability against fire.

Regulations regarding flame retardancy are based on Underwriters Laboratories (UL) standards, and, in preparing a resin composition, particularly a thermoplastic resin composition, having suitable flame retardancy satisfying the UL standards, a halogen-based flame retardant is generally kneaded in a thermoplastic resin. As described above, when flame retardancy is provided to a thermoplastic resin by applying a halogen-based flame retardant, excellent flame retardancy is exhibited and final products are prepared with almost no property degradation. However, upon processing, hydrogen halide gas is generated and thus a mold may be damaged. In addition, upon discarding, dioxin and hydrogen bromide gas having strong carcinogenicity are discharged from a waste incinerator due to the presence of a halogen compound, thereby adversely affecting the environment and the human body.

Accordingly, among the flame retardants used in flame retardant resin compositions, flame retardants called non-halogen flame retardants are mainly used as flame retardants that do not use halogen, and the most widely used non-halogen flame retardants are phosphorus-based flame retardants containing phosphorus. However, the phosphorus-based flame retardants, in some types of styrene-based resins, fail to generate char according to the working of the phosphorus-based flame retardant system, and thus hardly show sufficient flame retardancy.

### [Related Art Document]

### [Patent Document]

(Patent Document 1) Chinese Patent Publication No. 113772882 A

### DISCLOSURE OF THE INVENTION

### TECHNICAL PROBLEM

The present invention is designed to overcome the limitations of the related art, and thus, an aspect of the present invention provides a flame retardant resin composition including a specific compound as a phosphorus-based flame retardant in a resin composition, thereby obtaining excellent flame retardancy, and a method for preparing the same.

### TECHNICAL SOLUTION

(1) According to an aspect of the present invention, provided is a flame retardant resin composition including a graft copolymer containing a conjugated diene-based polymer, an aromatic vinyl-based monomer unit, and a vinyl cyan-based monomer unit, a matrix copolymer containing an aromatic vinyl-based monomer unit and a vinyl cyan-based monomer unit, a polyester-based resin, and a polymeric phosphorus-based flame retardant, wherein the polyester-based resin is present in a smaller amount than the polymeric phosphorus-based flame retardant, and the polymeric phosphorus-based flame retardant has at least one structural unit represented by Formula 1 below. 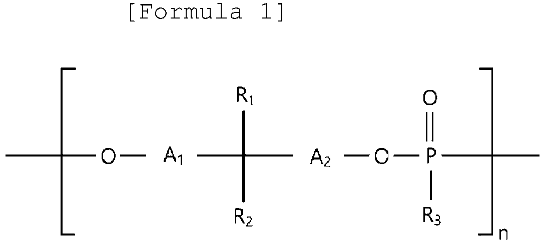 In this case, R₁ to R₃ are each either a hydrogen or an alkyl group having 1 to 30 carbon atoms, A₁ and A₂ are each an arylene group having 6 to 20 carbon atoms, and n is a natural number.
(2) The present invention provides the flame retardant resin composition according to (1) above, wherein the graft copolymer is present in a greater amount than the matrix copolymer.
(3) The present invention provides the flame retardant resin composition according to (1) or (2) above, wherein with respect to a total amount of the graft copolymer, the matrix copolymer, the polyester-based resin, and the polymeric phosphorus-based flame retardant, the graft copolymer is compr ised in an amount of 38 wt% to 47 wt%, and the matrix copolymer is comprised in an amount of 22 wt% to 33 wt%.
(4) The present invention provides the flame retardant resin composition according to any one of (1) to (3) above, wherein with respect to a total amount of the graft copolymer, the matrix copolymer, the polyester-based resin, and the polymeric phosphorus-based flame retardant, the polyester-based resin is comprised in an amount of 18 wt% to 40 wt%, and the polymeric phosphorus-based flame retardant is comprised in an amount of 18 wt% to 40 wt%.
(5) The present invention provides the flame retardant resin composition according to any one of (1) to (4) above, wherein the polyester-based resin is a polyethylene terephthalate resin.
(6) The present invention provides the flame retardant resin composition according to any one of (1) to (5) above, wherein with respect to an amount of the graft copolymer, the matrix copolymer, the polyester-based resin, and the polymeric phosphorus-based flame retardant, the polyester-based resin is comprised in an amount of 18 wt% to 40 wt%, the polymeric phosphorus-based flame retardant is comprised in an amount of 18 wt% to 40 wt%, and the graft copolymer is present in a greater amount than the matrix copolymer.
(7) The present invention provides the flame retardant resin composition according to any one of (1) to (6) above, wherein the polymeric phosphorus-based flame retardant has at least one structural unit represented by Formula 2 below. 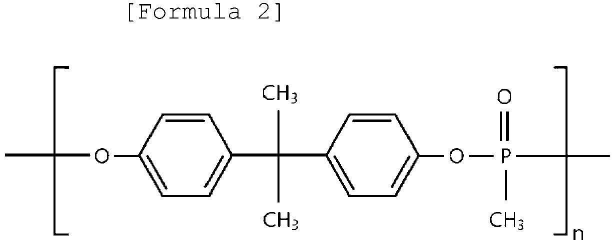
(8) The present invention provides the flame retardant resin composition according to (1) to (7) above, wherein in Formula 2 above, n is in the range of 1 to 1000.
(9) The present invention provides the flame retardant resin composition according to (1) to (8) above, wherein the polymeric phosphorus-based flame retardant has a weight average molecular weight of 5000 g/mol or greater.
(10) According to another aspect of the present invention, provided is a method for preparing a flame retardant resin composition, which includes mixing and extruding a graft copolymer containing a conjugated diene-based polymer, an aromatic vinyl-based monomer unit, and a vinyl cyan-based monomer unit, a matrix copolymer containing an aromatic vinyl-based monomer unit and a vinyl cyan-based monomer unit, a polyester-based resin, and a polymeric phosphorus-based flame retardant, wherein the polyester-based resin is present in a smaller amount than the polymeric phosphorus-based flame retardant, and the polymeric phosphorus-based flame retardant has at least one structural unit represented by Formula 1 below.

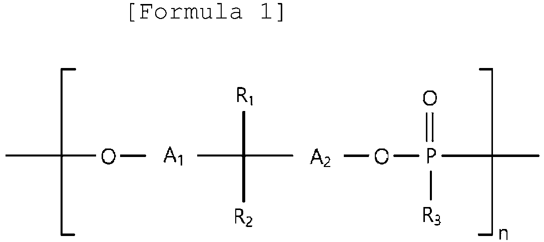

In this case, R₁ to R₃ are each either a hydrogen or an alkyl group having 1 to 30 carbon atoms, A₁ and A₂ are each an arylene group having 6 to 20 carbon atoms, and n is a natural number.

### ADVANTAGEOUS EFFECTS

According to the present invention, a flame retardant resin composition having excellent flame retardancy may be provided.

### MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

The term 'monomer unit' as used herein may refer to a component, a structure, or a material itself resulting from each monomer, and specifically, may refer to a repeating unit constituted in a polymer when monomers to be added participate in a polymerization reaction upon polymerizing the polymer.

Herein, 'weight average molecular weight' is generally measured through gel permeation chromatography (GPC). For example, a sample to be measured may be dissolved in a solution of tetrahydrofuran (THF) and then measured as a relative value to a standard sample (PS, standard polystyrene) through gel permeation chromatography.

The term 'composition' as used herein includes reaction products and decomposition products formed from materials of the composition as well as a mixture of materials including the composition.

### <Flame retardant resin composition>

The present invention provides a resin composition, specifically, a flame retardant resin composition.

The flame retardant resin composition according to an embodiment of the present invention includes a graft copolymer containing a conjugated diene-based polymer, an aromatic vinyl-based monomer unit, and a vinyl cyan-based monomer unit, a matrix copolymer containing an aromatic vinyl-based monomer unit and a vinyl cyan-based monomer unit, a polyester-based resin, and a polymeric phosphorus-based flame retardant, wherein the polyester-based resin is present in a smaller amount than the polymeric phosphorus-based flame retardant, and the polymeric phosphorus-based flame retardant has at least one structural unit represented by Formula 1 below.

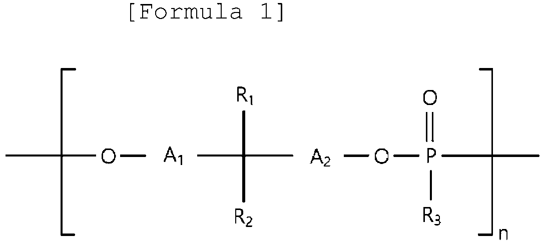

In this case, R₁ and R₃ are each either a hydrogen or an alkyl group having 1 to 30 carbon atoms, A₁ and A₂ are each an arylene group having 6 to 20 carbon atoms, and n is a natural number. Herein, the alkyl group may be linear or branched, and the arylene group refers to an aromatic ring group having two bonding positions, that is, a bivalent group.

According to an embodiment of the present invention, R₁ and R₃ in Formula 1 above may each be either a hydrogen or an alkyl group having 1 to 10 carbon atoms, and A₁ and A₂ may each be an arylene group having 6 to 15 carbon atoms, and as a more specific example, R₁ and R₃ in Formula 1 above may each be a hydrogen or an alkyl group having 1 to 5 carbon atoms, and A₁ and A₂ may each be an arylene group having 6 to 10 carbon atoms.

### 1. Graft copolymer

According to an embodiment of the present invention, the graft copolymer may be part of the flame retardant resin composition, and may be a resin for imparting basic physical properties to the flame retardant resin composition.

According to an embodiment of the present invention, the graft copolymer may include a conjugated diene-based polymer, an aromatic vinyl-based monomer unit, and a vinyl cyan-based monomer unit. As a specific example, the conjugated diene-based polymer may be prepared through polymerization of conjugated diene-based monomers to include a conjugated diene-based monomer unit, and as a more specific example, the conjugated diene-based polymer may be prepared through emulsion polymerization of conjugated diene-based monomers, making it easy to control an average particle size of the conjugated diene-based polymer in this case, and a conjugated diene-based polymer suitable for desired mechanical properties may thus be used.

According to an embodiment of the present invention, the conjugated diene-based monomers for forming a conjugated diene-based monomer unit of the conjugated diene-based polymer may be at least one selected from the group consisting of 1,3-butadiene, 2,3-dimethyl-1,3-butadiene, piperylene, 3-butyl-1,3-octadiene, isoprene, and 2-phenyl-1,3-butadiene, and more specifically, may be 1,3-butadiene.

According to an embodiment of the present invention, the graft copolymer may result from graft polymerization of an aromatic vinyl-based monomer unit and a vinyl cyan-based monomer unit onto a conjugated diene-based polymer. Accordingly, the graft copolymer may include the conjugated diene-based polymer, and the aromatic vinyl-based monomer unit and the vinyl cyan-based monomer unit grafted onto the conjugated diene-based polymer, and may include both a vinyl-based monomer unit and a vinyl cyan-based monomer unit that are not grafted onto the conjugated diene-based polymer in a portion where a graft layer of the graft copolymer is formed according to graft polymerization conditions. In this case, the graft polymerization may be performed through emulsion polymerization or bulk polymerization.

According to an embodiment of the present invention, an aromatic vinyl-based monomer for forming an aromatic vinyl-based monomer unit of the graft copolymer may be at least one selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl) styrene, and 1-vinyl-5-hexylnaphthalene, and as a specific example, may be styrene.

According to an embodiment of the present invention, the vinyl cyan-based monomer for forming a vinyl cyan-based monomer unit of the graft copolymer may be at least one selected from the group consisting of acrylonitrile, methacrylonitrile, ethacrylonitrile, phenylacrylonitrile, and α-chloroacrylonitrile, and as a specific example, may be acrylonitrile.

According to an embodiment of the present invention, the graft copolymer may include the conjugated diene-based polymer in an amount of 40 wt% to 90 wt%, the aromatic vinyl-based monomer unit in an amount of 5 wt% to 50 wt%, and the vinyl cyan-based monomer unit in an amount of 1 wt% to 30 wt%, and, as a specific example, may include the conjugated diene-based polymer in an amount of 50 wt% or greater, 80 wt% or less, or 70 wt% or less, the aromatic vinyl-based monomer unit in an amount of 10 wt% or greater, 40 wt% or less, or 30 wt% or less, and the vinyl cyan-based monomer unit in an amount of 1 wt% or greater, 5 wt% or greater, 20 wt% or less, or 15 wt% or less, and within this range, the mechanical properties of the resin composition are possibly secured.

According to an embodiment of the present invention, the graft copolymer is in a greater amount value than the matrix copolymer in the flame retardant resin composition, and accordingly, the flame retardant resin composition may have improved impact strength.

According to an embodiment of the present invention, the flame retardant resin composition may include the graft copolymer in an amount of 38 wt% to 47 wt%, with respect to an amount of the graft copolymer, the matrix copolymer, the polyethylene terephthalate resin, and the polymeric phosphorus-based flame retardant. Specifically, the flame retardant resin composition may include the graft copolymer in an amount of 38 wt% or greater, 39 wt% or greater, or 40 wt% or greater, and in an amount of 47 wt% or less, 46 wt% or less, or 45 wt% or less, with respect to an amount of the graft copolymer, the matrix copolymer, the polyethylene terephthalate resin, and the polymeric phosphorus-based flame retardant. Within this range, the flame retardant resin composition may have improved impact strength and obtain excellent flame retardancy.

### 2. Matrix copolymer

According to an embodiment of the present invention, the matrix copolymer may be part of the flame retardant resin composition, and may be a resin for imparting basic physical properties to the flame retardant resin composition.

According to an embodiment of the present invention, the matrix copolymer may include an aromatic vinyl-based monomer unit and a vinyl cyan-based monomer unit, and, as a specific example, may be prepared through emulsion polymerization or bulk polymerization of an aromatic vinyl-based monomer and a vinyl cyan-based monomer.

According to an embodiment of the present invention, the aromatic vinyl-based monomer for forming an aromatic vinyl-based monomer unit of the matrix copolymer may be at least one selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl) styrene, and 1-vinyl-5-hexylnaphthalene, and as a specific example, may be styrene.

According to an embodiment of the present invention, the vinyl cyan-based monomer for forming a vinyl cyan-based monomer unit of the matrix copolymer may be at least one selected from the group consisting of acrylonitrile, methacrylonitrile, ethacrylonitrile, phenylacrylonitrile, and α-chloroacrylonitrile, and as a specific example, may be acrylonitrile.

According to an embodiment of the present invention, the matrix copolymer may include the aromatic vinyl-based monomer unit in an amount of 10 wt% to 90 wt% and the vinyl cyan-based monomer in an amount of 10 wt% to 90 wt%, and as a specific example, may include the aromatic vinyl-based monomer unit in an amount of 20 wt% or greater, 30 wt% or greater, 80 wt% or less, or 70 wt% or less, and within this range, the graft copolymer has excellent dispersibility, and thus has excellent mechanical properties and physical property balance.

The graft copolymer and the matrix copolymer each include the aromatic vinyl-based monomer unit and the vinyl cyan-based monomer unit, and when the types of aromatic vinyl-based monomer unit and vinyl cyan-based monomer unit forming each copolymer are the same, the units are mixed and dispersed as the same component in an extrusion process of a resin composition, and thus in an actual flame retardant resin composition and a molded article molded therefrom, the conjugated diene-based polymer may be present in a dispersed form in a matrix formed of the aromatic vinyl-based monomer unit and the vinyl cyan-based monomer unit. Therefore, the amount of each of the graft copolymer and the matrix copolymer in the flame retardant resin composition may be determined from a total amount of the aromatic vinyl-based monomer unit and the vinyl cyan-based monomer unit, and the amount of the conjugated diene-based polymer in the flame retardant resin composition.

According to an embodiment of the present invention, the matrix copolymer is in a smaller amount value than the graft copolymer in the flame retardant resin composition, and accordingly, the flame retardant resin composition may have improved impact strength.

According to an embodiment of the present invention, the flame retardant resin composition may include the matrix copolymer in an amount of 25 wt% to 30 wt%, with respect to an amount of the graft copolymer, the matrix copolymer, the polyethylene terephthalate resin, and the polymeric phosphorus-based flame retardant. Specifically, the flame retardant resin composition may include the matrix copolymer in an amount of 22 wt% or greater, 23 wt% or greater, 24 wt% or greater, or 25 wt% or greater, and in an amount of 33 wt% or less, 32 wt% or less, 31 wt% or less, or 30 wt% or less, with respect to an amount of the graft copolymer, the matrix copolymer, the polyethylene terephthalate resin, and the polymeric phosphorus-based flame retardant. Within this range, the flame retardant resin composition may have improved impact strength and obtain excellent flame retardancy.

### 3. Polyester-based resin

According to an embodiment of the present invention, the polyester-based resin may serve to form char when heat is applied to the flame retardant resin composition.

According to an embodiment of the present invention, the polyester-based resin may be a polyethylene terephthalate resin or a polybutylene terephthalate resin, and, as a more specific example, may be a polyethylene terephthalate resin.

According to an embodiment of the present invention, the polyester-based resin may have an intrinsic viscosity value of 0.6 to 1.1.

According to an embodiment of the present invention, the flame retardant resin composition may include the polyethylene terephthalate resin in an amount of 18 wt% to 40 wt%, with respect to a total amount of the graft copolymer, the matrix copolymer, the polyester-based resin, and the polymeric phosphorus-based flame retardant. Specifically, the flame retardant resin composition may include the polyester-based resin in an amount of 18 wt% or greater, 19 wt% or greater, or 20 wt% or greater, and in an amount of 40 wt% or less, 39 wt% or less, 38 wt% or less, or 37 wt% or less, with respect to a total amount of the graft copolymer, the matrix copolymer, the polyester-based resin, and the polymeric phosphorus-based flame retardant. When the range described above is satisfied, excellent flame retardancy may be provided to the flame retardant resin composition without degradation in other physical properties.

According to an embodiment of the present invention, the polyester-based resin may be present in a smaller amount than the polymeric phosphorus-based flame retardant. In this case, further excellent flame retardancy may be provided to the flame retardant resin composition.

### 4. Polymeric phosphorus-based flame retardant

According to an embodiment of the present invention, the polymeric phosphorus-based flame retardant is used to provide flame retardancy to the flame retardant resin composition, and may have at least one structural unit represented by Formula 1 as described above.

More specifically, according to an embodiment of the present invention, the polymeric phosphorus-based flame retardant may have at least one structural unit represented by Formula 2 below.

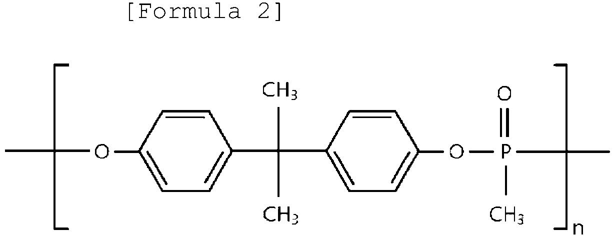

According to an embodiment of the present invention, the polymeric phosphorus-based flame retardant may have a weight average molecular weight of 5000 g/mol or greater. Specifically, the polymeric phosphorus-based flame retardant may have a weight average molecular weight of 5000 g/mol or greater, 7000 g/mol or greater, and 10000 g/mol or greater.

Meanwhile, when the polymeric phosphorus-based flame retardant has at least one structural unit represented by Formula 2, n in Formula 2 above may be in the range of 1 to 1000. As a specific example, n in Formula 2 above may be 16 or greater, 18 or greater, 20 or greater, 22 or greater, or 24 or greater, and may also be 950 or less, 900 or less, 850 or less, 800 or less, or 750 or less. When the range described above is satisfied, excellent flame retardancy may be provided without degradation in other physical properties of the flame retardant resin composition.

According to an embodiment of the present invention, the flame retardant resin composition may include the polymeric phosphorus-based flame retardant in an amount of 18 wt% to 40 wt%, with respect to a total amount of the graft copolymer, the matrix copolymer, the polyester-based resin, and the polymeric phosphorus-based flame retardant. Specifically, the flame retardant resin composition may include the polymeric phosphorus-based flame retardant in an amount of 18 wt% or greater, 19 wt% or greater, or 20 wt% or greater, and in an amount of 40 wt% or less, 39 wt% or less, 38 wt% or less, or 37 wt% or less, with respect to a total amount of the graft copolymer, the matrix copolymer, the polyester-based resin, and the polymeric phosphorus-based flame retardant. When the range described above is satisfied, excellent flame retardancy may be provided to the flame retardant resin composition without degradation in other physical properties.

### 5. Other additives

According to an embodiment of the present invention, the flame retardant resin composition may further include additives. The additives may be at least one selected from the group consisting of flame retardant aids, lubricants, antioxidants, light stabilizers, hydrolysis stabilizers, release agents, pigments, antistatic agents, conductivity imparting agents, electromagnetic wave shielding agents, magnetism imparting agents, mineral fillers, crosslinking agents, antibacterial agents, processing aids, metal deactivators, suppressants, anti-friction and wear agents, compatibilizers, anti-drip agents, and coupling agents. The additives described above may be used without limitation as long as the additives are used in the art, and those skilled in the art may select the additives included in the present invention to suit the purpose.

According to an embodiment of the present invention, the flame retardant aid among the additives may be ethylene methyl acrylate (EMA).

The flame retardant aid may be included in an amount of 2 parts by weight to 7 parts by weight with respect to 100 parts by weight of a total amount of the graft copolymer, the matrix copolymer, and the polyester-based resin. Specifically, the flame retardant aid may be included in an amount of 2 parts by weight or greater, 2.5 parts by weight or greater, or 3 parts by weight or greater and in an amount of 7 parts by weight or less, 6 parts by weight or less, or 5 parts by weight or less, with respect to 100 parts by weight of a total amount of the graft copolymer, the matrix copolymer, and the polyethylene terephthalate resin. When the range described above is satisfied, excellent flame retardancy may be provided to the flame retardant resin composition without degradation in other physical properties.

Excluding the flame retardant aid, the other additives may be included in an amount of 0.5 parts by weight to 2 parts by weight with respect to 100 parts by weight of a total amount of the graft copolymer, the matrix copolymer, and the polyester-based resin. When the range described above is satisfied, the physical properties of the flame retardant resin composition may not be degraded.

### <Method for preparing flame retardant resin composition>

The present invention provides a method for preparing the flame retardant resin composition.

The method for preparing a flame retardant resin composition according to an embodiment of the present invention includes mixing and extruding a graft copolymer containing a conjugated diene-based polymer, an aromatic vinyl-based monomer unit, and a vinyl cyan-based monomer unit, a matrix copolymer containing an aromatic vinyl-based monomer unit and a vinyl cyan-based monomer unit, a polyester-based resin, and a polymeric phosphorus-based flame retardant, wherein the polyester resin is present in a smaller amount than the polymeric phosphorus-based flame retardant, and the polymeric phosphorus-based flame retardant has at least one structural unit represented by Formula 1 above.

According to an embodiment of the present invention, the polymeric phosphorus-based flame retardant may have at least one structural unit represented by Formula 2 above.

According to an embodiment of the present invention, the flame retardant resin composition may include the graft copolymer in an amount of 38 wt% to 47 wt%, with respect to a total amount of the graft copolymer, the matrix copolymer, the polyester-based resin, and the polymeric phosphorus-based flame retardant.

According to an embodiment of the present invention, the flame retardant resin composition may include the matrix copolymer in an amount of 25 wt% to 30 wt%, with respect to a total amount of the graft copolymer, the matrix copolymer, the polyester-based resin, and the polymeric phosphorus-based flame retardant.

According to an embodiment of the present invention, the flame retardant resin composition may include the polyester-based resin in an amount of 18 wt% to 40 wt%, with respect to a total amount of the graft copolymer, the matrix copolymer, the polyester-based resin, and the polymeric phosphorus-based flame retardant.

According to an embodiment of the present invention, the flame retardant resin composition may include the polymeric phosphorus-based flame retardant in an amount of 18 wt% to 40 wt%, with respect to a total amount of the graft copolymer, the matrix copolymer, the polyester-based resin, and the polymeric phosphorus-based flame retardant.

### <Molded article molded from flame retardant resin composition>

In addition, the present invention provides a molded article molded from the flame retardant resin composition.

According to an embodiment of the present invention, the molded article may be extruded and injection molded from the flame retardant resin composition, and may be applied to product groups requiring flame retardancy, and specific examples thereof may be interior and exterior materials for vehicles, office equipment, and parts for various electrical/electronic products.

Hereinafter, examples of the present invention will be described in detail in such a manner that it may easily be performed by a person with ordinary skill in the art to which the present invention pertains. The present invention may, however, be embodied in many different forms, and is not limited to Examples set forth herein.

### Examples and Comparative Examples

In Examples and Comparative Examples, the following components were commonly mixed in parts by weight shown in Tables 1 to 3 below.
(A) Graft copolymer: ABS resin (DP270 from LG Chem).
(B) Matrix copolymer: SAN resin (90HR from LG Chem).
(C) Polyester-based resin: As either (C-1) or (C-2), (C-1) is a PET resin (Hubis, I.V. = 0.6 to 0.7), and (C-2) is a PETG resin (SKYGREEN K2012 from SK chemical).
(D) Polymeric phosphorus-based flame retardant: HM1100 from Nofia
(E) Flame retardant aid: Ethylene methyl acrylate (EMA).
(F) Other additives: N,N-ethylene-bis-stearamide (compatibilizer) and poly tetrafluoroethylene (anti-drip agent)

**[Table 1]**

| Item | Example | | | | | | |
|---|---|---|---|---|---|---|---|
| | 1 | 2 | 3 | 4 | 5 | 6 | 7 |
| (A) Graft copolymer | 30 | 35 | 40 | 45 | 40 | 40 | 40 |
| (B) Matrix copolymer | 40 | 35 | 30 | 25 | 30 | 30 | 30 |
| (C-1) PET | 30 | 30 | 30 | 30 | 30 | 30 | 15 |
| (D) Polymeric phosphorus-based flame retardant | 45 | 45 | 45 | 45 | 35 | 40 | 60 |
| (E) EMA | 5 | 5 | 5 | 5 | 5 | 5 | 3 |
| (F) Other additives | 1.6 | 1.6 | 1.6 | 1.6 | 1.6 | 1.6 | 1.6 |

**[Table 2]**

| Item | Example | | | | | | |
|---|---|---|---|---|---|---|---|
| | 8 | 9 | 10 | 11 | 12 | 13 | 14 |
| (A) Graft copolymer | 40 | 40 | 40 | 38 | 35 | 37 | 40 |
| (B) Matrix copolymer | 30 | 30 | 30 | 27 | 25 | 27 | 30 |
| (C-1) PET | 30 | 30 | 40 | 35 | 40 | 36 | - |
| (C-2) PETG | - | - | - | - | - | - | 30 |
| (D) Polymeric phosphorus-based flame retardant | 35 | 58 | 48 | 58 | 46 | 45 | 35 |
| (E) EMA | 3 | 5 | 5 | 5 | 5 | 5 | 5 |
| (F) Other additives | 1.6 | 1.6 | 1.6 | 1.6 | 1.6 | 1.6 | 1.6 |

**[Table 3]**

| Item | Comparative Example | | | |
|---|---|---|---|---|
| | 1 | 2 | 3 | 4 |
| (A) Graft copolymer | 40 | 40 | 40 | 40 |
| (B) Matrix copolymer | 30 | 30 | 30 | 30 |
| (C-1) PET | 30 | 35 | 60 | 50 |
| (D) Polymeric phosphorus-based flame retardant | 30 | 30 | 15 | 38 |
| (E) EMA | 5 | 3 | 3 | 5 |
| (F) Other additives | 1.5 | 1.6 | 1.6 | 1.6 |

### Experimental Example

Flame resistance (UL-94 V Test, Vertical Burning Test): A specimen was prepared by injecting a flame retardant resin compositions prepared in Examples and Comparative Examples above in accordance with UL standards (125 mm × 12.5 mm) and the specimen was obtained to have a thickness of 2.0 mm, and the results determined by recording the first and second combustion times and glowing times are shown in Tables 4 to 6 below.

In the method of determining UL-94 based on the first and second combustion times and glowing times, when the first and second combustion times were each within 10 seconds, the sum of the combustion times of all five specimens was within 50 seconds, and ignition on a lower cotton was not shown, the case was evaluated as V-0, when the first and second combustion times were each within 30 seconds, the sum of the combustion times of all five specimens was within 250 seconds, and ignition on a lower cotton was not shown, the case was evaluated as V-1, and when the combustion time was the same as V-1, but ignition on a lower cotton was shown, the case was evaluated as N.R.

Impact strength: (Notched Izod Impact Strength, kgf·cm/cm): The results of measuring the notched Izod impact strength of a 1/4 inch thick specimen at 23 °C in accordance with ASTM D256 are shown in Tables 4 to 6 below.

Heat deflection temperature (HDT, °C): The results of measurement using specimens in accordance with ASTM D648 are shown in Tables 4 to 6 below.

Tensile strength (TS, Kgf/cm²): The results of measurement using specimens in accordance with ASTM D638 are shown in Tables 4 to 6 below.

**[Table 4]**

| Item | Example | | | | | | |
|---|---|---|---|---|---|---|---|
| | 1 | 2 | 3 | 4 | 5 | 6 | 7 |
| (C) / (A) + (B) + (C) + (D) | 20.6% | 20.6% | 20.6% | 20.6% | 22.2% | 21.4% | 10.3% |
| (D) / (A) + (B) + (C) + (D) | 31.0% | 31.0% | 31.0% | 31.0% | 25.9% | 28.6% | 41.4% |
| Impact strength (1/4") | 7.0 | 8.0 | 12.8 | 15.0 | 12.8 | 13.4 | 7.4 |
| Tensile strength | 457 | 438 | 404 | 375 | 379 | 392 | 409 |
| Heat deflection temperature | 81.8 | 81.6 | 82.2 | 80.5 | 80.6 | 81.2 | 81.7 |
| Flame resistance @ 2.0 mm | V-1 | V-1 | V-1 | V-1 | V-1 | V-1 | V-1 |

**[Table 5]**

| Item | Example | | | | | | |
|---|---|---|---|---|---|---|---|
| | 8 | 9 | 10 | 11 | 12 | 13 | 14 |
| (C)/(A)+(B)+(C)+(D) | 22.2% | 19.0% | 25.3% | 22.1% | 27.3% | 24.8% | 22.2% |
| (D)/(A)+(B)+(C)+(D) | 25.9% | 36.7% | 30.3% | 36.7% | 31.5% | 31.0% | 25.9% |
| Impact strength (1/4") | 12.3 | 9.3 | 9.3 | 7.6 | 7.6 | 6.0 | 14.7 |
| Tensile strength | 377 | 414 | 412 | 412 | 414 | 404 | 379 |
| Heat deflection temperature | 80.4 | 79.0 | 77.9 | 82 | 81.8 | 80.6 | 77.0 |
| Flame resistance @ 2.0 mm | V-1 | V-0 | V-0 | V-0 | V-0 | V-0 | V-1 |

**[Table 6]**

| Item | Comparative Example | | | |
|---|---|---|---|---|
| | 1 | 2 | 3 | 4 |
| (C) / (A) + (B) + (C) + (D) | 23.0% | 25.9% | 41.4% | 31.6% |
| (D) / (A) + (B) + (C) + (D) | 23.0% | 22.2% | 10.3% | 24.1% |
| Impact strength (1/4") | 13.1 | 14.6 | 10.0 | 10.1 |
| Tensile strength | 373 | 380 | 384 | 413 |
| Heat deflection temperature | 79.7 | 80.4 | 79.1 | 77.6 |
| Flame resistance @ 2.0 mm | N.R. | N.R. | N.R. | V-1 |

As shown in Tables 4 to 6 above, it is determined that Examples 1 to 14 had equivalent tensile strength and heat deflection temperature and obtained excellent flame retardancy, compared to Comparative Example 1 in which the polyester-based resin was present in the same amount as the polymeric phosphorus-based flame retardant, and Comparative Examples 2 and 3 in which the polyester-based resin was present in a greater amount than the polymeric phosphorus-based flame retardant.

Meanwhile, the evaluation on the flame resistance of Comparative Example 4 is supposed to be done as compared with Examples 9 and 10. This is because the resin composition may have improved flame resistance with a greater amount of polyester-based resin and polymeric phosphorus-based flame retardant in the resin composition, and accordingly, in the evaluation on the flame resistance of the resin composition, accurate flame resistance evaluation may be made only when resin compositions containing the same amount of polyester-based resin and polymeric phosphorus-based flame retardant are compared. Accordingly, when Comparative Example 4 was compared with Examples 9 and 10, it is determined that Comparative Example 4 in which the polyester-based resin was present in a greater amount than the polymeric phosphorus-based flame retardant had reduced flame resistance compared to Examples 9 and 10.

When comparing Examples 1 to 4, in which the compositions of the polyester-based resin and the polymeric phosphorus-based flame retardant were the same, but the ratios of the graft copolymer and the matrix copolymer were different, it is confirmed that Examples 3 and 4, in which the graft copolymer was present in a greater amount than the matrix copolymer, had excellent impact strength than Example 1, in which the graft copolymer was present in a smaller amount than the matrix copolymer, and Example 2, in which the graft copolymer was present in the same amount as the matrix copolymer.

When comparing Examples 3, 4, and 7, in which the graft copolymer was present in a greater amount than the matrix copolymer and the polyester-based resin and the polymeric phosphorus-based flame retardant were present in the same amount, with respect to a total amount of the graft copolymer, the matrix copolymer, the polyethylene terephthalate resin, and the polymeric phosphorus-based flame retardant, it is determined that Examples 3 and 4 containing an appropriate amount of polyester-based resin and polymeric phosphorus-based flame retardant had excellent impact strength, compared to Example 7 containing the polyethylene terephthalate resin in an amount of less than 18 wt% and the polymeric phosphorus-based flame retardant in an amount of greater than 40 wt%.

## Claims

1. A flame retardant resin composition comprising:
a graft copolymer comprising a conjugated diene-based polymer, an aromatic vinyl-based monomer unit, and a vinyl cyan-based monomer unit;
a matrix copolymer comprising an aromatic vinyl-based monomer unit and a vinyl cyan-based monomer unit;
a polyester-based resin; and
a polymeric phosphorus-based flame retardant,
wherein the polyester-based resin is present in a smaller amount than the polymeric phosphorus-based flame retardant, and
the polymeric phosphorus-based flame retardant has at least one structural unit represented by Formula 1 below: 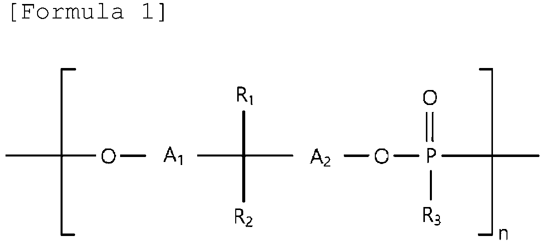
wherein in Formula 1, R₁ to R₃ are each either a hydrogen or an alkyl group having 1 to 30 carbon atoms,
A₁ and A₂ are each an arylene group having 6 to 20 carbon atoms, and
n is a natural number.

2. The flame retardant resin composition of claim 1, whereinthe graft copolymer is present in a greater amount than the matrix copolymer.

3. The flame retardant resin composition of claim 2, whereinwith respect to a total amount of the graft copolymer, the matrix copolymer, the polyester-based resin, and the polymeric phosphorus-based flame retardant,
the graft copolymer is comprised in an amount of 38 wt% to 47 wt%, and
the matrix copolymer is comprised in an amount of 22 wt% to 33 wt%.

4. The flame retardant resin composition of claim 1, whereinwith respect to a total amount of the graft copolymer, the matrix copolymer, the polyester-based resin, and the polymeric phosphorus-based flame retardant,
the polyester-based resin is comprised in an amount of 18 wt% to 40 wt%, and
the polymeric phosphorus-based flame retardant is comprised in an amount of 18 wt% to 40 wt%.

5. The flame retardant resin composition of claim 4, whereinthe polyester-based resin is a polyethylene terephthalate resin.

6. The flame retardant resin composition of claim 1, whereinwith respect to an amount of the graft copolymer, the matrix copolymer, the polyester-based resin, and the polymeric phosphorus-based flame retardant,
the polyester-based resin is comprised in an amount of 18 wt% to 40 wt%,
the polymeric phosphorus-based flame retardant is comprised in an amount of 18 wt% to 40 wt%, and
the graft copolymer is present in a greater amount than the matrix copolymer.

7. The flame retardant resin composition of claim 1, whereinthe polymeric phosphorus-based flame retardant has at least one structural unit represented by Formula 2 below:

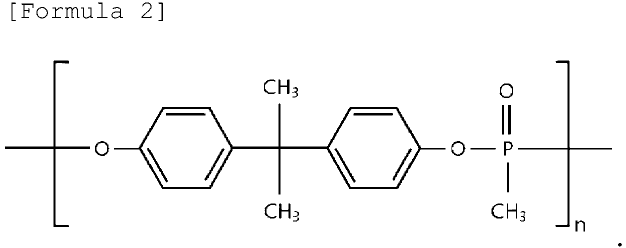

8. The flame retardant resin composition of claim 7, whereinin Formula 2 above, n is in the range of 1 to 1000.

9. The flame retardant resin composition of claim 1, whereinthe polymeric phosphorus-based flame retardant has a weight average molecular weight of 5000 g/mol or greater.

10. A method for preparing a flame retardant resin composition, the method comprising:
mixing and extruding a graft copolymer comprising a conjugated diene-based polymer, an aromatic vinyl-based monomer unit, and a vinyl cyan-based monomer unit; a matrix copolymer comprising an aromatic vinyl-based monomer unit and a vinyl cyan-based monomer unit; a polyester-based resin; and a polymeric phosphorus-based flame retardant,
wherein the polyester-based resin is present in a smaller amount than the polymeric phosphorus-based flame retardant, and
the polymeric phosphorus-based flame retardant has at least one structural unit represented by Formula 1 below: 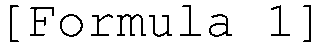 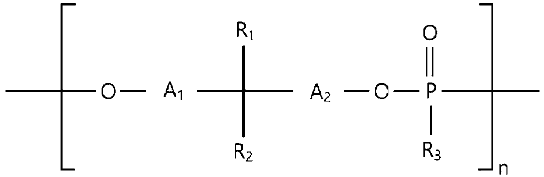
wherein in Formula 1, R₁ to R₃ are each either a hydrogen or an alkyl group having 1 to 30 carbon atoms,
A₁ and A₂ are each an arylene group having 6 to 20 carbon atoms, and
n is a natural number.
